# EUROPÄISCHE PATENTSCHRIFT

(11) **EP 1 627 800 B1**
(45) Veröffentlichungstag und Bekanntmachung des Hinweises auf die Patenterteilung: **04.09.2013**
(21) Anmeldenummer: 05017691.6
(22) Anmeldetag: 13.08.2005
(51) Int. Cl.: B62D 25/08, B62D 29/04, B60R 21/34

(54) **Kraftfahrzeug-Frontend**
Vehicle front part
Partie avant de véhicule

(30) Priorität: 19.08.2004 DE 102004040095
(43) Veröffentlichungstag der Anmeldung: 22.02.2006
(73) Patentinhaber: HBPO GmbH, 59557 Lippstadt (DE)
(72) Erfinder: Raulf, Robert, 59555 Lippstadt (DE); Bauer, Vitalij, 59557 Lippstadt (DE); Opperbeck, Guido, 59557 Lippstadt (DE); Pillas, Thomas, 70825 Münchingen (DE); Zhao, Gaoming, Dr., 59552 Lippstadt (DE)
(74) Vertreter: Schober, Mirko

(56) Entgegenhaltungen:
- FR-A1- 2 783 794
- FR-A1- 2 841 863
- JP-A- 2002 019 638

## Beschreibung

Die Erfindung bezieht sich auf ein Kraftfahrzeug-Frontend gemäß den Merkmalen des Oberbegriffs des Patentanspruchs 1.

Ein solches Frontend ist aus dem Dokument FR-A1-2 841 863 bekannt. Zwar ist bei dem Montageträger dieses Frontends ein oberer Schloßquerträger nicht vorhanden, weswegen der untere Querträger und die Seitenträger des Montageträgers sich zu einer U-Form ergänzen, die nach oben hin offen ist. In dem Raum oberhalb des Montageträgers sind jedoch insbesondere solche Bauteile vorhanden, die zu der Fahrzeugstruktur gehören. Zum einen wird hierdurch die Fronthöhe des betreffenden Fahrzeugs vergrößert, zum anderen ist hierdurch der Deformierungsweg des Außenhautelements im Fall eines Fußgängeraufpralls begrenzt.

Vorwiegend hat man Frontends an Kraftfahrzeugen bislang mit einer möglichst steifen oberen Struktur quer zur Fahrtrichtung versehen, um sowohl die Karosseriesteifigkeit zu erhöhen als auch die Kräfte vom Motorhaubenschloß sicher in die Fahrzeugstruktur einleiten zu können. In bekannter Ausführung ist dazu in den Montageträger eines solchen Frontends ein oberer Schloßquerträger integriert, der nicht nur die aufrechten Seitenträger miteinander verbindet sondern seitlich über deren Oberenden hinaus vorsteht und mit den beidseitigen Kotflügelbänken eines Kraftfahrzeugs über die vorstehenden Enden verschraubbar ist. In der Regel trägt ein solcher, vorwiegend aus Metall bestehender Schloßquerträger ein Schloßunterteil eines Motorhaubenschlosses, welches in Fahrzeugquerrichtung gesehen mittig angeordnet ist. Je nach den hier aufzunehmenden Haubenkräften müssen in der Fahrzeughöhenrichtung, der Z-Richtung, für den Schloßquerträger Profile mit einem hohen Trägheitsmoment gewählt werden, was gleichbedeutend mit größeren Abmessungen dieser Profile in der Z-Achse ist.

Solche Konstruktionen erschweren die Erfüllung der Fußgängerschutzanforderungen für den frontseitigen Fahrzeugbereich. Hiernach muß in Höhe des Hüftkontaktes bei dem genormten Versuchsaufprall, welcher je nach Fahrzeuggeometrie oberhalb von 800 mm von der Aufstandsfläche gesehen liegt, ein noch ausreichender Deformationsweg für das die Fahrzeugfront verkleidende, sich deformierende Außenhautelement vorgesehen werden. Zudem muß das vom Prüfimpaktor getroffene Karosserieteil die Möglichkeit bieten, den Deformationsweg gleichmäßig ohne Kraftspitzen durchlaufen zu können.

Ein unter dem Außenhautelement, wie der Motorhaube, querlaufendes Profil, wie das des vorerwähnten Schloßquerträgers ist aufgrund seines Steifigkeitsverhaltens nicht geeignet, die Fußgängerschutzanforderungen zu erfüllen. So steht der Schloßquerträger sozusagen der Deformation des Außenhautelementes im Crashfalle im Wege, wenn nicht durch eine entsprechende Bauform dafür gesorgt wird, daß oberhalb des Schloßquerträgers ein entsprechender Ausweichraum für das sich deformierende Außenhautelement geschaffen ist. Bei den heutigen Kraftfahrzeugen besteht jedoch kaum ein nutzbarer Freiraum unterhalb der Motorhaube, deshalb müssen andere Lösungen für die Schaffung eines derartigen Ausweichraums gesucht werden.

Aus dem Dokument DE 199 11 833 A1 ist es dazu bekannt, den Schloßquerträger in Fahrzeuglängsrichtung gesehen nach hinten hin anzuordnen, also näher zum Motorraum hin. Hierbei befindet sich der Schloßquerträger mit dem Schloß hinter einer in Fahrzeugquerrichtung sich erstreckenden Vertikalebene, die von der Rückseite des Kühlmoduls aufgespannt wird. Dadurch kann zwar zwischen dem Schloßquerträger, der noch oberhalb des Kühlmoduls angeordnet ist und der Motorhaube eine ausreichende Distanz geschaffen werden, um einen genügenden Verformungsweg zur Verfügung zu stellen, allerdings vergrö-ßert sich hierbei die Höhe der Fahrzeugfront, die einen erheblichen Einfluß auf das Frontdesign des Fahrzeugs hat.

Der Erfindung liegt die Aufgabe zugrunde, ein Frontend mit einem Montageträger der eingangs genannten Art zu schaffen, welches bei ausreichendem Verformungsweg für das die Fahrzeugfront verkleidende Außenhautelement eine niedrigere Bauhöhe der Fahrzeugfront ermöglicht.

Diese Aufgabe wird bei einem Frontend der oben genannten Art durch die kennzeichnenden Merkmale des Patentanspruchs 1 gelöst.

Für die Erfindung ist die Weglassung des oberen Schloßquerträgers am Montageträger wesentlich, so daß der sonst für den Schloßquerträger benötigte Raum als Ausweichraum für das betreffende Außenhautelement, wie die Motorhaube, im Verformungsfalle zur Verfügung steht. Voraussetzung dafür ist, zwei Motorhaubenschlösser vorzusehen, die sich rechts und links vom Kühlmodul an den Oberenden der aufrechten Seitenträger des Montageträgers befinden.

Grundsätzlich können auch die am Montageträger seitlich oberhalb des Kühlmoduls anzuordnenden Scheinwerfer mit in die Deformationszone einbezogen werden, was eine sogenannte aufprallweiche Ausbildung der Scheinwerfer erfordert. Gleiches gilt ebenfalls für die Oberteile der Haubenschlösser, die an der Motorhaube angeordnet sind. Hierfür werden Halterungen vorgesehen, die einerseits' aufprallweich ausgeführt sind und andererseits die auftretenden Haubenkräfte sicher bewältigen können, wozu allein schon von Vorteil ist, daß zwei Haubenschlösser vorhanden sind.

Die Erfindung wird nachfolgend anhand der Zeichnung an einem Ausführungsbeispiel noch näher erläutert. Dabei zeigen:
Fig. 1 in schematischer Vorderansicht ein Kraftfahrzeug-Frontend mit einem Montageträger und
Fig. 2 eine schematische Seitansicht des Frontends nach Fig. 1.

Die wesentlichen Elemente des Frontends finden sich an dem Montageträger, der einen unteren Querträger 1 und daran nach oben hin anschließende Seitenträger 2 aufweist, die sich mit dem unteren Querträger 1 zu einer U-Form ergänzen. Die in Abstand voneinander angeordneten Seitenträger 2 schließen zwischen sich einen Aufnahmeraum 3 ein, in welchem ein Kühlmodul 4 angeordnet ist. Der Aufnahmeraum 3 ist nach oben hin offen und daran schließt nach oben hin ein Ausweichraum 7 an, dessen untere Begrenzung die Oberkante 4.1 des Kühlmoduls 4 darstellt.

Die Seitenträger 2 des Montageträgers haben Oberenden 2.1, die in gleicher Höhe wie die Oberkante 4.1 des Kühlmoduls 4 liegen. Darunter im Bereich der Oberenden 2.1 der Seitenträger 2 ist jeweils ein Aufnahmeraum 5 gebildet, in welchem sich ein Schloßunterteil 6 oder zumindest ein das Schloßunterteil 6 aufnehmendes Metallelement befindet. An den oberen Bereich der Seitenträger 2 schließen seitlich nach außen hin Anbindungsträger 10 an, deren freie Enden mit der Karosseriestruktur des betreffenden Fahrzeugs, insbesondere mit den Kotflügelbänken, verschraubbar sind. Die Oberseiten 10.1 der Anbindungsträger 10 liegen höhengleich mit den Oberenden 2.1 der Seitenträger 2 und mit der Oberkante 4.1 des Kühlmoduls 4.

In dem Winkel zwischen den Anbindungsträgern 10 und den Seitenträgern 2 ist jeweils ein plattenförmiger Montageflansch 11 angeordnet, bei dem es sich um ein steifes Metallteil handelt, welches zur Verbindung des Montageträgers mit den Fahrzeuglängsträgern bestimmt ist. Die Montageflansche 11 sind fest mit den Seitenträgern 2 und den Anbindungsträgern 10 des Montageträgers verbunden, sie stehen aber auch in metallischer Verbindung mit dem Schloßunterteil 6 im Einbau 5 an den Oberenden 2.1 der Seitenträger 2 bzw. mit einem in dem Einbauraum 5 angeordneten metallenen Bauteil, an welchem das Schloßunterteil 6 aufgenommen werden kann.

Der gesamte Montageträger mit seinem unteren Querträger 1, seinen Seitenträgern 2 und den Anbindungsträgern 10 ist als Hybridbauteil ausgebildet und besteht aus einem Metall-Kunststoff-Verbund. Die metallische Verbindung zwischen dem Schloßunterteil 6 und dem ihm nächstliegenden Montageflansch 11 besteht über die Metalleinlage dieses Hybridbauteils. Da sich die Montageflansche 11 unterhalb der Anbindungsträger 10 nahe den Oberenden 2.1 der Seitenträger 2 befinden, besteht somit nur ein kurzer Weg, um die von den Motorhaubenschlössern übertragenen Kräfte in die Fahrzeugstruktur, nämlich die Fahrzeuglängsträger, einzuleiten. Dies ist deshalb von besonderer Bedeutung, weil der Montageträger ohne einen oberen Schloßquerträger auskommt.

Der Deformations- oder Ausweichraum 7 oberhalb des Kühlmoduls 4 ermöglicht einen Verformungsweg für ein den Montageträger oberseitig überspannendes Außenhautelement 8, bei dem es sich in der Regel um den vorderen Abschnitt einer Motorhaube handelt. Dieser Bereich der Motorhaube ist derjenige, der im Falle eines Fußgängeraufpralls in der sogenannten "upper leg"-Höhe liegt und deshalb den für diesen Bereich geforderten Fußgängerschutz erfüllen muß. In diesem kritischen Bereich findet das Außenhautelement 8 einen ausreichenden Verformungsweg im Ausweich- oder Deformationsraum 7. bis hin zu der Oberkante 4.1 des Kühlmoduls 4.

In den Verformungsbereich oberhalb des Montageträgers können auch die auf den Anbindungsträgern 10 anzuordnenden Scheinwerfer miteinbezogen werden, für die eine aufprallweiche Ausführung vorgesehen wird. Gleiches gilt für mit den Schloßunterteilen 6 zusammenwirkende Schloßoberteile 12, für die zumindest aufprallweiche Halterungen vorgesehen werden können, die ein Stauchen in der Verformungsrichtung zulassen.

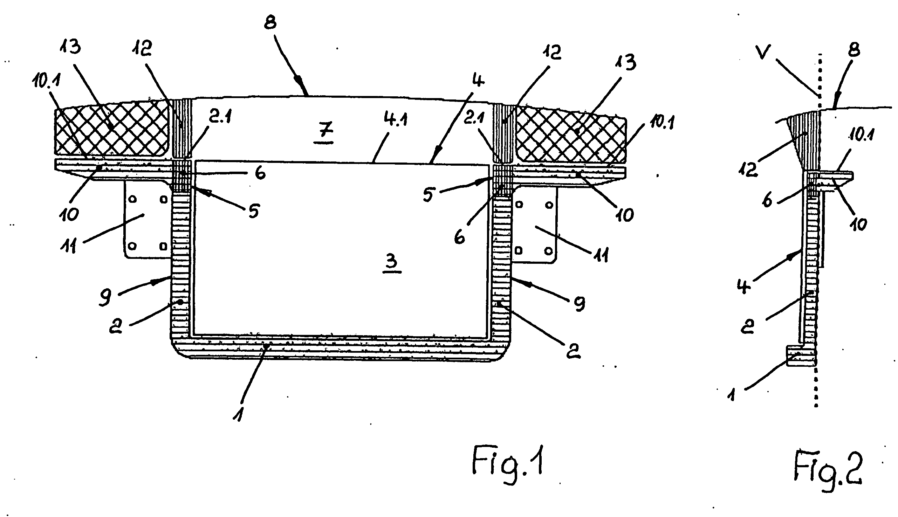

Fig. 2 veranschaulicht anhand einer gepunkteten Linie eine in Fahrzeugquerrichtung verlaufende Vertikalebene (V), welche in der von der Rückseite des Kühlmoduls 4 aufgespannten Ebene liegt. Vor dieser Vertikalebene V sind in Fahrzeuglängsrichtung gesehen diejenigen Bauteile angeordnet, die zu dem Motorhaubenschloß gehören, wie insbesondere das jeweilige Schloßoberteil 12 und Schloßunterteil 6.

## Patentansprüche

1. Frontend für ein Kraftfahrzeug, insbesondere für einen Personen- oder Kleinlastkraftwagen, mit einem Montageträger und einem diesen in der Einbaulage überspannenden Außenhautelement, wobei der Montageträger einen unteren Querträger (1) und zwei daran anschließende, nach oben hin sich erstreckende Seitenträger (2) aufweist, die als Metall-Kunststoff-Hybridbauteil ausgeführt sind und einen daran festen metallenen Montageflansch (11) zur Verbindung mit Fahrzeuglängsträgern aufweisen und die ferner in Abstand voneinander angeordnet sind und zwischen sich einen Aufnahmeraum (3) mit einem darin angeordneten Kühlmodul (4) einschließen, und wobei ferner zumindest ein Einbauraum (5) für ein Schloßunterteil (6) eines Motorhaubenschlosses vorgesehen ist, wobei der untere Querträger (1) und die Seitenträger (2) des Montageträgers in U-Form angeordnet sind, dass der Aufnahmeraum (3) für das Kühlmodul (4) dementsprechend nach oben hin offen ist und oberhalb der Oberkante (4.1) des Kühlmoduls (4) ein Ausweichraum (7) für das sich bei einem Aufprall von außen nach innen hin deformierende Außenhautelement (8) gebildet ist, und dass im Bereich der Oberenden (2.1) der Seitenträger (2) je ein Einbauraum (5) für je ein darin aufgenommenes Schloßunterteil (6) oder ein dieses aufnehmenden Metallelements des Haubenschlosses angeordnet ist, wobei zwischen diesem Schloßunterteil (6) oder dem dieses aufnehmenden Metallelements und dem Montageflansch (11) eine metallische Verbindung über die in den betreffenden Seitenträger (2) integrierten Metallteile besteht, wobei an den oberen Bereich der Seitenträger (2) seitlich nach außen hin Anbindungsträger (10) anschließen,
**dadurch gekennzeichnet,**
**dass** die Oberenden (2.1) der Seitenträger (2) in gleicher Höhe wie die Oberkante (4.1) des Kühlmoduls (4) liegen.

2. Montageträger nach Anspruch 1,
**dadurch gekennzeichnet,**
**dass** die metallenen Montageflansche (11) an den vom Kühlmodul (4) abliegenden Außenseiten (9) der Seitenträger angeordnet sind.

3. Montageträger nach Anspruch 2,
**dadurch gekennzeichnet,**
**dass** an den Oberenden (2.1) der Seitenträger (2) seitlich nach außen hin abgewinkelte Anbindungsträger (10) fest anschließen, mit denen die Montageflansche (11) ebenfalls fest verbunden sind.

4. Montageträger nach Anspruch 3,
**dadurch gekennzeichnet,**
**dass** die Anbindungsträger (10) Oberseiten (10.1) haben, die höhengleich mit den Oberenden (2.1) der Seitenträger (2) und der Oberkante (4.1) des Kühlmoduls (4) liegen.

5. Montageträger nach einem der Ansprüche 1 - 4,
**dadurch gekennzeichnet,**
**dass** er in seiner Gesamtheit mit seinem unteren Querträger (1), seinen Seitenträgern (2) und den Anbindungsträgern (10) als Metall-Kunststoff-Hybridbauteil ausgebildet ist.

## Claims

1. Front end for a motor vehicle, more particularly for a people carrier or light truck, with an assembly support and an outer skin element covering this in the installation position, wherein the assembly support has a lower cross support (1) and two upwardly extending side supports (2) adjoining same, which are made as a metal-plastics hybrid component part and have a metal assembly flange (11) fixed thereon for connecting with the vehicle longitudinal supports and which furthermore are mounted at a distance from one another and include between them a receiving space (3) with a cooling module (4) mounted therein, and wherein furthermore at least one installation space (5) is provided for a lower lock part (6) of an engine bonnet lock, wherein the lower cross support (1) and the side supports (2) of the assembly support are arranged in U-form, that the receiving space (3) for the cooling module (4) is open upwards accordingly and above the upper edge (4.1) of the cooling module (4) an escape chamber (7) is formed for the outer skin element (8) which is deformed in the event of an impact inwards from outside, and that in the region of the upper ends (2.1) of the side supports (2) there is an installation space (5) for each lower lock part (6) housed therein or a metal element of the bonnet lock housing same, wherein between this lower lock part (6), or the metal element holding same, and the assembly flange (11) there is a metal connection via the metal parts which are integrated in the relevant side support (2), wherein the upper region of the side supports (2) is adjoined at the sides on the outside by connecting supports (10), **characterised in that** the upper ends (2.1) of the side supports (2) lie at the same level as a the upper edge (4.1) of the cooling module (4).

2. Assembly support according to claim 1 **characterised in that** the metal assembly flanges (11) are mounted on the outsides (9) of the side supports remote from the cooling module (4).

3. Assembly support according to claim 2 **characterised in that** the upper ends (2.1) of the side supports (2) are fixedly adjoined by connecting supports (10) which are angled outwards at the sides and to which the assembly flanges (11) are likewise fixedly connected.

4. Assembly support according to claim 3 **characterised in that** the connecting supports (10) have upper sides (10.1) which lie at the same height as the upper ends (2.1) of the side supports (2) an d the upper edge (4.1) of the cooling module (4).

5. Assembly support according to one of claims 1 to 4 **characterised in that** it is formed in its entirety as a metal-plastics hybrid component comprising its lower cross supports (1), its side supports (2) and the connecting supports (10).

## Revendications

1. Extrémité frontale pour un véhicule automobile, notamment pour une voiture particulière ou une camionnette, avec un support de montage et un élément d'habillage extérieur, qui, à l'état monté, recouvre celui-ci, sachant que le support de montage présente une traverse inférieure (1) et deux montants latéraux (2), y raccordés, qui, s'étendant vers le haut, forment un composant hybride en métal et matière synthétique, et sont dotés d'une brides de montage métalliques (11), qui y est fixée pour le raccordement aux longerons du véhicule automobile, et qui, en outre, sont disposés à distance l'un de l'autre, et forment entre eux un logement (3), dans lequel est installé un module de refroidissement (4), et sachant qu'au moins une chambre de montage (5) est en outre prévue pour recevoir la partie inférieure (6) d'une serrure de capot de moteur, la traverse inférieure (1) et que les montants latéraux (2) du support de montage sont agencés en U, que le logement (3), destiné à recevoir le module de refroidissement (4), est adéquatement ouvert vers le haut et que, au-dessus du bord supérieur (4.1) du module de refroidissement (4), est formé un espace de dégagement (7) pour l'élément d'habillage extérieur (8) se déformant de l'extérieur vers l'intérieur en cas d'impact, et que, dans la région de chacune des extrémités supérieures (2.1) de chacun des montants latéraux (2), est agencé un espace de montage (5), destiné à recevoir une partie inférieure de serrure (6) ou un élément métallique de la serrure de capot de moteur, recevant celle-ci, sachant qu'entre cette partie inférieure de serrure (6) ou l'élément métallique recevant celle-ci et la bride de montage (11) est prévue une liaison métallique par l'intermédiaire des pièces métalliques, intégrées dans le montant latéral (2) concerné, sachant que, dans la région supérieure des montants latéraux (2), des supports de liaison (10) se raccordent latéralement, vers l'extérieur,
**caractérisé en ce que**
Les extrémités supérieures (2.1) des montants latéraux (2) sont situées à la même hauteur que le bord supérieur (4.1) du module de refroidissement (4).

2. Support de montage selon la revendication 1, **caractérisé en ce que** les brides de montage métalliques (11) sont disposées sur les faces extérieures (9) des montants latéraux, opposées au module de refroidissement (4).

3. Support de montage selon la revendication 2, **caractérisé en ce que**, aux extrémités supérieures (2.1) des montants latéraux (2), sont raccordés fixement des supports de liaison (10), coudés latéralement vers l'extérieur, auxquels les brides de montage (11) sont également reliées fixement.

4. Support de montage selon la revendication 3, **caractérisé en ce que** les supports de liaison (10) sont dotes de faces supérieures (10.1), qui sont à niveau avec les extrémités supérieures (2.1) des montants latéraux (2) et le bord supérieur (4.1) du module de refroidissement (4).

5. Support de montage selon l'une des revendications 1 à 4 , **caractérisé en ce que**, dans son ensemble, celui-ci forme, avec sa traverse inférieure (1), ses montants latéraux (2) et les supports de liaison (10), un composant hybride en métal et matière synthétique.
